# EUROPEAN PATENT SPECIFICATION

(11) **EP 2 612 005 B1**
(45) Date of publication and mention of the grant of the patent: **18.06.2014**
(21) Application number: 11770829.7
(22) Date of filing: 19.07.2011
(51) Int. Cl.: F02B 37/007, F02B 37/013, F02B 37/18

(54) **EXHAUST MODULE AND INTERNAL COMBUSTION ENGINE**
ABGASMODUL UND BRENNKRAFTMASCHINE
MODULE D'ECHAPPEMENT ET MOTEUR A COMBUSTION INTERNE

(30) Priority: 30.08.2010 FI 20105894
(43) Date of publication of application: 10.07.2013
(73) Proprietor: Wärtsilä Finland Oy, 65380 Vaasa (FI)
(72) Inventor: RAIKIO, Tero, FI-65230 Vaasa (FI); WIDJESKOG, Klaus, FI-65730 Jungsund (FI)
(74) Representative: Berggren Oy Ab
(86) International application number: PCT/FI2011/050664
(87) International publication number: WO 2012/028767

(56) References cited:
- GB-A- 2 069 593
- US-A- 5 528 902
- US-A- 5 697 217
- US-A1- 2002 056 444

## Description

### Technical field of the invention

The present invention relates to an exhaust module for an internal combustion engine with two-stage turbocharging, as defined in the preamble of claim 1. The invention also concerns an internal combustion engine in accordance with the preamble of the other independent claim.

### Background of the invention

The use of two-stage turbocharging in large internal combustion engines is becoming more and more common. The expression large internal combustion engines refers here to such engines that are used for instance at power plants or as main or auxiliary engines in ships. Often that kind of engines are compression ignition engines, but also spark ignition engines are sometimes used, especially gas engines. High charge pressures are needed for improved engine efficiency, and high pressures are difficult to achieve with one turbocharger only. An engine with two-stage turbocharging comprises a high-pressure turbocharger and a low-pressure turbocharger that are connected in series. Exhaust gas from the engine flows through the turbines of both turbochargers. Similarly, intake air is compressed first by the compressor of the low-pressure turbocharger and then by the compressor of the high-pressure turbocharger. A problem related to two-stage turbocharging is that the turbochargers and exhaust and intake ducts between the engine and the turbochargers require a lot of space. This problem is most prominent in the case of V-engines, where double number of turbochargers and ducts is needed. Especially in marine applications it is desirable to be able to fit the engine and all the auxiliaries in as small space as possible.

In current large internal combustion engines with two-stage turbocharging : i.e. as disclosed in document GB2069593A , the exhaust systems are usually made of several separate pipe sections, each pipe section having its own insulating layer around it. The pipes are also supported separately. As a result, the systems are both heavy and space consuming. The pipes are also difficult to insulate and support and noise and vibration problems are often created. In addition to this, it is time consuming to assemble the systems at the factory.

### Summary of the invention

The object of the present invention is to provide an improved exhaust module for an internal combustion engine. Another object of the present invention is to provide an improved internal combustion engine. The characterizing features of the exhaust module according to the present invention are given in the characterizing part of claim 1. The characterizing features of the internal combustion engine according to the present invention are given in the characterizing part of the other independent claim.

According to the present invention, an exhaust module for an internal combustion engine comprises a first high-pressure duct for connecting a first exhaust manifold of the engine to the turbine inlet of a first high-pressure turbocharger, and a first low-pressure duct for connecting the turbine outlet of the first high-pressure turbocharger to the turbine inlet of a first low-pressure turbocharger. A second high-pressure duct for connecting a second exhaust manifold of the engine to the turbine inlet of a second high-pressure turbocharger and a second low-pressure duct for connecting the turbine outlet of the second high-pressure turbocharger to the turbine inlet of a second low-pressure turbocharger whereby the exhaust module is a one-piece cast.

An internal combustion engine according to the present invention comprises a first exhaust manifold, a second exhaust manifold, a first high-pressure turbocharger, a second high-pressure turbocharger, a first low-pressure turbocharger, and a second low-pressure turbocharger, each of the turbochargers comprising a turbine inlet and a turbine outlet, and an exhaust module defined above.

The invention has several advantages. Since the high-pressure ducts are integral with the low-pressure ducts, the structure of the exhaust module is both compact and light. Weight reduction can be achieved for instance by reducing wall thicknesses in selected areas. For example, due to smaller pressure difference, the wall between the high-pressure duct and the low-pressure duct can be thinner than in the case of separate ducts. It is also easy to arrange rigid supports for exhaust gas, by-pass and wastegate ducts in the module. The ducts can be optimized so that their length and flow resistance is minimized, which will lead to better engine performance, lower fuel consumption and reduced emissions. The whole exhaust module can be arranged inside a common insulating layer and the module can thus be insulated using less insulating material and still very good heat retention capacity and effective noise reduction can be achieved. This leads to higher exhaust temperature after the turbochargers and enables the use of selective catalytic reduction. Effective heat transfer from the high-pressure duct to the low-pressure duct due to the integral structure of the exhaust module improves the efficiency of the low-pressure turbocharger. The exhaust module is inexpensive to manufacture and assembly time at the engine factory or on-site is reduced significantly.

The invention is suitable for use in connection with a V-engine, where both sides of the engine are provided with a high-pressure turbocharger and a low-pressure turbocharger. In that kind of internal combustion engines it is most problematic to arrange all the ducts needed for the exhaust and turbocharging system, if conventional arrangements are used. The exhaust module according to the present invention can provide a weight saving of 40 percent compared to a conventional arrangement.

According to an embodiment of the invention, the exhaust module comprises a wastegate outlet from the high-pressure duct or the low-pressure duct. There can also be a support for a wastegate duct in connection with the outlet.

According to another embodiment of the invention, at least one support for a turbocharger is integrated into the exhaust module.

According to an embodiment of the invention, the exhaust module is arranged at least partly inside a common insulating layer.

Features of other embodiments of the present invention are given in the dependent claims.

### Brief description of the drawings

Fig. 1 shows an exhaust module according to an embodiment of the present invention.
Fig. 2 shows an exhaust module according to another embodiment of the present invention.
Fig. 3 shows a cross-sectional view of the exhaust module of Fig. 2 along line A-B.
Fig. 4 shows part of an internal combustion engine according to an embodiment of the invention.
Fig. 5 shows the internal combustion engine of Fig. 3 from another angle.
Fig. 6 shows part of an internal combustion engine comprising an exhaust module with an insulating layer.
Fig. 7 shows a wastegate arrangement for an internal combustion engine comprising an exhaust module according to the present invention.

### Detailed description of the invention

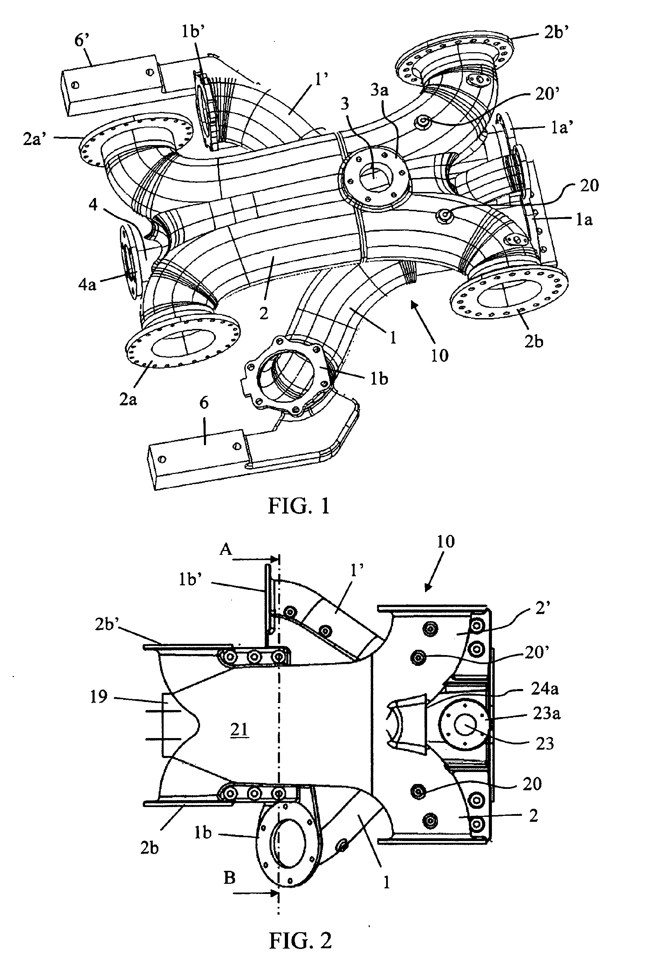

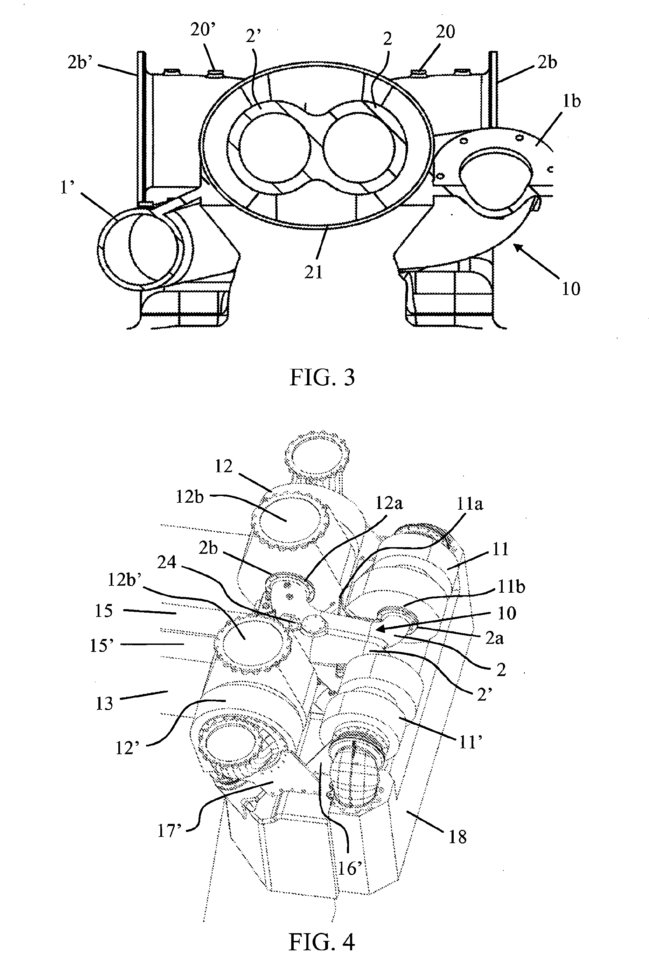

The invention is now described in more detail with reference to the accompanying drawings. In Fig. 1 is shown an exhaust module 10 according to an embodiment of the present invention. In Figs. 2 and 3 is shown a similar exhaust module 10. The exhaust module 10 of Figs. 1-3 can be used in connection with a large V-engine. The exhaust module 10 comprises a first high-pressure duct 1 and a second high-pressure duct 1'. At the first ends of the first and the second high-pressure ducts 1, 1' there are provided flanges 1a and 1a' for attaching the exhaust module 10 to the first exhaust manifold 15 and the second exhaust manifold 15' of an engine 13, part of which can be seen in Figs. 4-6. At the second ends of the high-pressure ducts 1, 1' there are provided flanges 1b, 1b' for attaching the high-pressure ducts 1, 1' to the turbine inlets 11a, 11a' of a first high-pressure turbocharger 11 and a second high-pressure turbocharger 11'. The high-pressure ducts 1, 1' connect the exhaust manifolds 15, 15' of the engine 13 to the turbine inlets 11a, 11a' of the high-pressure turbochargers 11, 11' and allow the exhaust gas to flow from the engine 13 to the turbines of the high-pressure turbochargers 11, 11'.

The exhaust module 10 also comprises a first low-pressure duct 2 and a second low-pressure duct 2'. The first ends of the low-pressure ducts 2, 2' are provided with flanges 2a, 2a' for attaching the low-pressure ducts 2, 2' to the turbine outlets 11b, 11b' of the high-pressure turbochargers 11, 11'. The flanges 2b, 2b' at the second ends of the low-pressure ducts 2, 2' are used for attaching the low-pressure ducts 2, 2' to the turbine inlets 12a, 12a' of the low-pressure turbochargers 12, 12'. Through the low-pressure ducts 2, 2' exhaust gas can flow from the turbines of the high-pressure turbochargers 11, 11' to the turbines of the low-pressure turbochargers 12, 12'. The high-pressure ducts 1, 1' are integrated with the low-pressure ducts 2, 2'.

The low-pressure ducts 2, 2' are arranged above the high-pressure ducts 1, 1' so that the second ends of the low-pressure ducts 2, 2' are close to the first ends of the high-pressure ducts 1, 1'. Parts of the low-pressure ducts 2, 2' are parallel to the high-pressure ducts 1, 1'. Since both the low-pressure ducts 2, 2' and the high-pressure ducts 1, 1' are parts of the same exhaust module 10, heat transfer from the high-pressure ducts 1, 1' to the low-pressure ducts 2, 2' is effective and the efficiency of the low-pressure turbochargers 12, 12' is improved. Part of the walls of the high-pressure ducts 1, 1' can also be made thinner than in the case of separate ducts. This is possible since the pressure difference between the high-pressure ducts 1, 1' and the low-pressure ducts 2, 2' is significantly smaller than the pressure difference between the high-pressure ducts 1, 1' and the atmosphere.

The exhaust module 10 of Fig. 1 is provided with supports 6, 6', to which the first and second high-pressure turbochargers 11, 11' can be fastened. In the embodiment of Fig. 1, the supports 6, 6' are attached to the high-pressure ducts 1, 1'. The supports 6, 6' are located so that the turbine inlets 11a, 11a' of the high-pressure turbochargers 11, 11' can be connected to the flanges 1b, 1b' at the second ends of the high-pressure ducts 1, 1', and the flanges 2a, 2a' at the first ends of the low-pressure ducts 2, 2' can be connected to the turbine outlets 11b, 11b' of the high-pressure turbochargers 11, 11'. Also the supports 6, 6' are integral parts of the exhaust module 10. The supports 6, 6' can comprise oil inlets and oil drains for the high-pressure turbochargers 11, 11'. It will be understood by a person skilled in the art that similar supports can be provided for the low-pressure turbochargers 12, 12' as well.

In the embodiment of Figs. 2 and 3, there are no separate supports for turbochargers, but the flanges 1b, 1b' at the second ends of the high-pressure ducts 1, 1' and/or flanges 2a, 2a' at the first ends of the low-pressure ducts 2, 2' work as supports for the high-pressure turbochargers 11, 11'. Similarly, flanges 2b, 2b' at the second ends of the low-pressure ducts 2, 2' work as supports for the low-pressure turbochargers 12, 12'. Flanges 1b, 1b' 2a and/or 2a' form thus a rigid support for the turbine sides of the high-pressure turbochargers 11, 11' and flanges 2b, 2b' form a rigid support for the turbine sides of the low-pressure turbochargers 12, 12'. Compressor sides of the high-pressure turbochargers 11, 11' are supported with flexible feet 16, 16' to a turbocharger bracket 18. Compressor sides of the low-pressure turbochargers 12, 12' are supported with second flexible feet 17, 17' to the turbocharger bracket 18.

The first and second low-pressure ducts 2, 2' are provided with a common wastegate outlet 3. In connection with the wastegate outlet 3, there is a flange 3a that works as a support for a wastegate duct (not shown). Through the wastegate outlet 3, exhaust gas can flow into the wastegate duct and bypass the low-pressure turbochargers 12, 12'. Of course, separate wastegate outlets and wastegate ducts could be provided for the first and second low-pressure ducts 2, 2'.

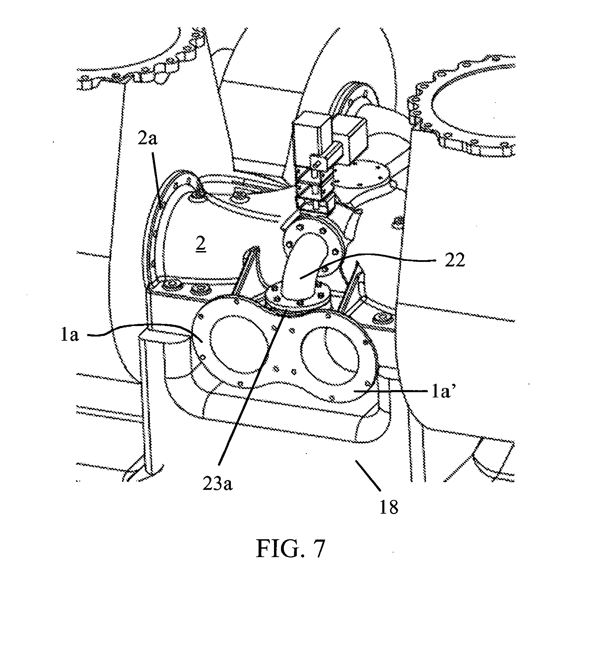

In the embodiment of Fig. 2, a second wastegate outlet 23 is arranged on the upper surface of the high-pressure ducts 1, 1'. In connection with the second wastegate outlet 23, there is a flange 23a that works as a support for a second wastegate duct 22, which can be seen in Fig. 7. The low-pressure ducts 2, 2' are provided with a wastegate inlet 24 and a flange 24a is arranged in connection with the wastegate inlet 24. The wastegate duct 22 is arranged between the flange 23a that is in connection with the high-pressure ducts 1, 1' and the flange 24a that is in connection with the low-pressure ducts 2, 2'. Exhaust gas can thus flow from the high-pressure ducts 1, 1' into the low-pressure ducts 2, 2' through the second wastegate duct 22 and pass the high-pressure turbochargers 11, 11'. Also the flange 24 works as a support for the wastegate duct 22.

The exhaust module 10 can also comprise a by-pass duct 4, as shown in Fig. 1. The by-pass duct 4 is arranged below the low-pressure ducts 2, 2' and between the high-pressure ducts 1, 1'. The first end of the by-pass duct 4 is at the same end of the exhaust module 10 as the second ends of the high-pressure ducts 1, 1'. At the first end of the by-pass duct 4, there is a flange 4a that works as a support for a by-pass valve. At the other end of the by-pass duct 4 there are inlets into the low-pressure ducts 2, 2'. A by-pass valve and a by-pass pipe can be fastened to the flange 4a. Intake air of the engine 13 can be guided through the by-pass pipe from the air intake manifolds of the engine 13 into the by-pass duct 4 and further into the low-pressure ducts 2, 2'. The by-pass duct 4 and the support 4a for a by-pass valve are integral with the rest of the exhaust module 10.

The exhaust module 10 can be provided with many different auxiliaries. For instance, housings 20, 20' for turbine cleaning nozzles can be arranged in the low-pressure ducts 2, 2', as shown in Figs. 1-3. Naturally, similar housings could be arranged in the high-pressure-ducts 1, 1'. Through the turbine cleaning nozzles for instance steam can be injected into the ducts 1, 1', 2, 2' for cleaning the turbines of the turbochargers 11, 11', 12, 12'. The low-pressure ducts 2, 2' can also be provided with housings for reducing agent nozzles. Through the reducing agent nozzles reducing agent, such as urea, can be injected into the low-pressure ducts 2, 2' to allow selective catalytic reduction downstream from the low-pressure turbochargers 12, 12'.

It is also possible to arrange a heat source 19 in connection with the low-pressure ducts 2, 2'. The heat source 19 can be for instance a burner or an electrical heater. In the embodiment of Fig. 2, the heat source 19 is arranged to heat up the outer surface of the low-pressure ducts 2, 2'. However, it would also be possible to inject combustible fluid together with air and/or oxygen into the low-pressure ducts 2, 2'. The purpose of the heat source 19 is to raise the temperature of the exhaust gases after the low-pressure turbochargers 12, 12' to allow effective selective catalytic reduction.

Other parts that can be integrated into the exhaust module 10 include a starting air duct for supplying the engine with pressurized air for starting, and different supports for exhaust gas ducts. It is also possible to provide the exhaust module 10 with inlet casings for the turbines of the turbochargers 11, 11', 12, 12'. The purpose of the inlet casing is to change the exhaust gas flow rotational for the turbine of the turbocharger 11, 11', 12, 12'. The inlet casings can be integral parts of the exhaust module 10, or they can be inserted into the module 10 as separate parts. The embodiment with inlet casings is especially suitable for exhaust modules 10 where the flanges 1b, 1b' at the second ends of the high-pressure ducts 1, 1' and the flanges 2b, 2b' at the second ends of the low-pressure ducts 2, 2' work as supports for the high-pressure and low-pressure turbochargers 11, 11', 12, 12'. The exhaust module 10 can also comprise outlet casings for the turbines of the high-pressure turbochargers 11, 11'.

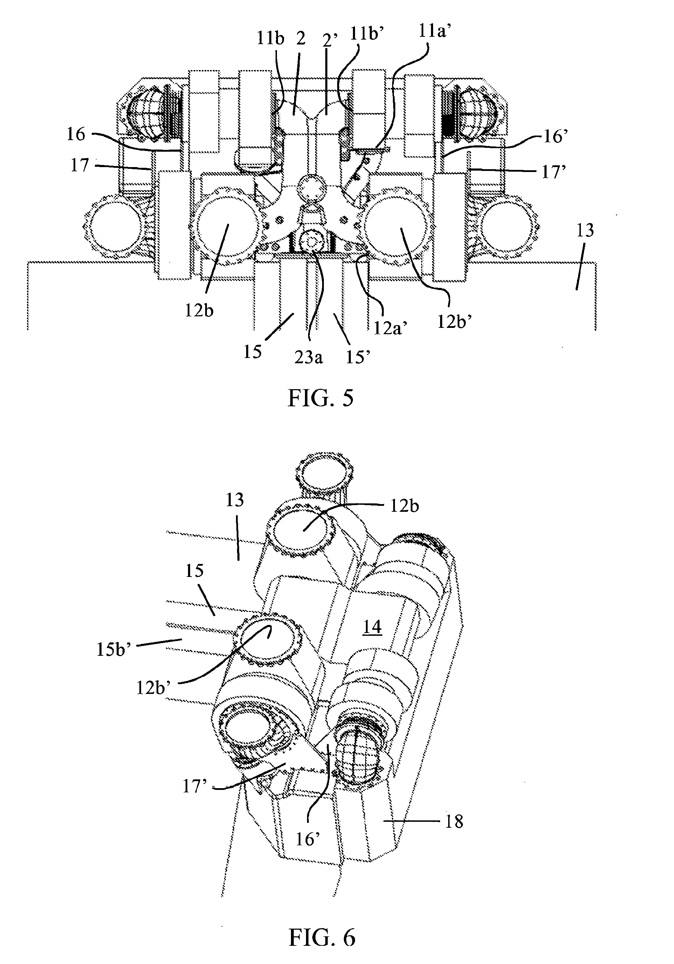

In Fig. 6 is shown an embodiment of the invention where the whole exhaust module 10 is arranged inside a common insulating layer 14. The insulating layer 14 reduces effectively heat flow from the exhaust module 10 and helps to keep the exhaust temperature high also after the low-pressure turbochargers 12, 12'. A selective catalytic reduction system can thus be located downstream from the low-pressure turbochargers 12, 12' and exhaust temperature can be kept high enough for selective catalytic reduction. Also heat transfer from the exhaust gas to the intake air of the engine can be minimized. In the embodiment of Figs. 2 and 3, an insulation layer 21 is arranged around the low-pressure ducts 2, 2'.

The exhaust module 10 is manufactured as a one-piece cast.

It will be appreciated by a person skilled in the art that the invention is not limited to the embodiments described above, but may vary within the scope of the appended claims.

## Claims

1. An exhaust module (10) for an internal combustion engine (13) with two-stage turbocharging, which exhaust module (10) comprises a first high-pressure duct (1) for connecting a first exhaust manifold (15) of the engine (13) to the turbine inlet (11a) of a first high-pressure turbocharger (11), a first low-pressure duct (2) for connecting the turbine outlet (11b) of the first high-pressure turbocharger (11) to the turbine inlet (12a) of a first low-pressure turbocharger (12), a second high-pressure duct (1') for connecting a second exhaust manifold (15') of the engine (13) to the turbine inlet (11a') of a second high-pressure turbocharger (11'), and a second low-pressure duct (2') for connecting the turbine outlet (11b') of the second high-pressure turbocharger (11') to the turbine inlet (12a') of a second low-pressure turbocharger (12'), **characterized in that** the exhaust module (10) is a one-piece cast.

2. An exhaust module (10) according to claim 1, **characterized in that** the module (10) comprises a wastegate outlet (3, 23) from the high-pressure duct (1, 1') or the low-pressure duct (2, 2').

3. An exhaust module (10) according to claim 2, **characterized in that** a support (3a, 23a) for a wastegate duct is arranged in connection with the wastegate outlet (3, 23).

4. An exhaust module (10) according to any of the preceding claims, **characterized in that** the module (10) comprises a by-pass duct (4) and a support (4a) for a by-pass valve.

5. An exhaust module (10) according to any of the preceding claims, **characterized in that** the module (10) comprises at least one support (1a, 1a', 2a, 2a', 2b, 2b', 6, 6') for a turbocharger (11, 11', 12, 12').

6. An exhaust module (10) according to any of the preceding claims, **characterized in that** the module (10) comprises a housing (20, 20') for a turbine cleaning nozzle.

7. An internal combustion engine (13) comprising a first exhaust manifold (15), a second exhaust manifold (15'), a first high-pressure turbocharger (11), a second high-pressure turbocharger (11'), a first low-pressure turbocharger (12), and a second low-pressure turbocharger (12'), each of the turbochargers (11, 11' 12, 12') comprising a turbine inlet (11a, 11a', 12a, 12a') and a turbine outlet (11b, 11b', 12b, 12b'), **characterized in that** the engine (13) comprises an exhaust module (10) according to any of claims 1-6.

8. An internal combustion engine (13) according to claim 7, **characterized in that** the exhaust module (10) is arranged at least partly inside a common insulating layer (14, 21).

9. An internal combustion engine (13) according to claim 7 or 8, **characterized in that** the engine (13) is provided with an external heat source (19) for heating up the exhaust gas in the low-pressure duct (12, 12').

## Patentansprüche

1. Abgasmodul (10) für einen Verbrennungsmotor (13) mit zweistufiger Turboaufladung, wobei das Abgasmodul (10) einen ersten Hochdruckkanal (1) zum Verbinden eines ersten Auspuffkrümmers (15) des Motors (13) mit dem Turbineneinlass (11a) eines ersten Hochdruck-Turboladers (11), einen ersten Niederdruckkanal (2) zum Verbinden des Turbinenauslasses (11b) des ersten Hochdruck-Turboladers (11) mit dem Turbineneinlass (12a) eines ersten Niederdruck-Turboladers (12), einen zweiten Hochdruckkanal (1') zum Verbinden eines zweiten Auspuffkrümmers (15') des Motors (13) mit dem Turbineneinlass (11a') eines zweiten Hochdruck-Turboladers (11') und einen zweiten Niederdruckkanal (2') zum Verbinden des Turbinenauslasses (11b') des zweiten Hochdruck-Turboladers (11') mit dem Turbineneinlass (12a') eines zweiten Niederdruck-Turboladers (12') umfasst, **dadurch gekennzeichnet, dass** das Abgasmodul (10) ein einstückiges Gussstück ist.

2. Abgasmodul (10) nach Anspruch 1, **dadurch gekennzeichnet, dass** das Modul (10) einen Wastegateauslass (3, 23) von dem Hochdruckkanal (1, 1') oder dem Niederdruckkanal (2, 2') umfasst.

3. Abgasmodul (10) nach Anspruch 2, **dadurch gekennzeichnet, dass** eine Halterung (3a, 23a) für einen Wastegatekanal in Verbindung mit dem Wastegateauslass (3, 23) eingerichtet ist.

4. Abgasmodul (10) nach einem der vorhergehenden Ansprüche, **dadurch gekennzeichnet, dass** das Modul (10) einen Bypasskanal (4) und eine Halterung (4a) für ein Bypassventil umfasst.

5. Abgasmodul (10) nach einem der vorhergehenden Ansprüche, **dadurch gekennzeichnet, dass** das Modul (10) wenigstens eine Halterung (1a, 1a', 2a, 2a', 2b, 2b', 6, 6') für einen Turbolader (11, 11', 12, 12') umfasst.

6. Abgasmodul (10) nach einem der vorhergehenden Ansprüche, **dadurch gekennzeichnet, dass** das Modul (10) ein Gehäuse (20, 20') für eine Turbinenreinigungsdüse umfasst.

7. Verbrennungsmotor (13), umfassend einen ersten Auspuffkrümmer (15), einen zweiten Auspuffkrümmer (15'), einen ersten Hochdruck-Turbolader (11), einen zweiten Hochdruck-Turbolader (11'), einen ersten Niederdruck-Turbolader (12), und einen zweiten Niederdruck-Turbolader (12'), wobei jeder der Turbolader (11, 11', 12, 12') einen Turbineneinlass (11a, 11a', 12a, 12a') und einen Turbinenauslass (11b, 11b', 12b, 12b') umfasst, **dadurch gekennzeichnet, dass** der Motor (13) ein Abgasmodul (10) nach einem der Ansprüche 1 bis 6 umfasst.

8. Verbrennungsmotor (13) nach Anspruch 7, **dadurch gekennzeichnet, dass** das Abgasmodul (10) wenigstens teilweise im Inneren einer gemeinsamen Isolierschicht (14, 21) angeordnet ist.

9. Verbrennungsmotor (13) nach Anspruch 7 oder 8, **dadurch gekennzeichnet, dass** der Motor (13) mit einer externen Wärmequelle (19) versehen ist, um das Abgas in dem Niederdruckkanal (12, 12') zu erhitzen.

## Revendications

1. Module d'échappement (10) pour un moteur à combustion interne (13) comprenant un turbocompresseur à deux étages, lequel module d'échappement (10) comprend un premier conduit haute pression (1) pour raccorder un premier collecteur d'échappement (15) du moteur (13) vers l'entrée de la turbine (11a) d'un premier turbocompresseur haute-pression (11), un premier conduit basse-pression (2) pour raccorder la sortie de turbine (11b) du premier turbocompresseur haute-pression (11) vers l'entrée de turbine (12a) d'un premier turbocompresseur basse-pression (12), un second conduit haute-pression (1') pour raccorder un second collecteur d'échappement (15') du moteur (13) à l'entrée de turbine (11a') d'un second turbocompresseur haute-pression (11'), et un second conduit basse-pression (2') pour raccorder la sortie de turbine (11b') du second turbocompresseur haute-pression (11') à l'entrée de turbine (12a') d'un second turbocompresseur basse-pression (12'), **caractérisé en ce que** le module d'échappement (10) est coulé d'une seule pièce.

2. Module d'échappement (10) selon la revendication 1, **caractérisé en ce que** le module d'échappement (10) comprend une sortie de décharge des gaz d'échappement (3, 23) du conduit haute-pression (1, 1') ou du conduit basse-pression (2, 2').

3. Module d'échappement (10) selon la revendication 2, **caractérisé en ce qu'**un support (3a, 23a) pour un conduit de décharge des gaz d'échappement est agencé en liaison avec la sortie de décharge des gaz d'échappement (3, 23).

4. Module d'échappement (10) selon l'une quelconque des revendications précédentes, **caractérisé en ce que** le module (10) comprend un conduit de dérivation (4) et un support (4a) pour une soupape de dérivation.

5. Module d'échappement (10) selon l'une quelconque des revendications précédentes, **caractérisé en ce que** le module (10) comprend au moins un support (1a, 1a', 2a, 2a', 2b, 2b', 6, 6') pour un turbocompresseur (11, 11', 12, 12').

6. Module d'échappement (10) selon l'une quelconque des revendications précédentes, **caractérisé en ce que** le module (10) comprend un logement (20, 20') pour une buse de nettoyage de turbine.

7. Moteur à combustion interne (13) comprenant un premier collecteur d'échappement (15), un second collecteur d'échappement (15'), un premier turbocompresseur haute-pression (11), un second turbocompresseur haute-pression (11'), un premier turbocompresseur basse-pression (12) et un second turbocompresseur basse-pression (12'), chacun des turbocompresseurs (11, 11', 12, 12') comprenant une entrée de turbine (11a, 11a', 12a, 12a') et une sortie de turbine (11b, 11b', 12b, 12b'), **caractérisé en ce que** le moteur (13) comprend un module d'échappement (10) selon l'une quelconque des revendications 1 - 6.

8. Moteur à combustion interne (13) selon la revendication 7, **caractérisé en ce que** le module d'échappement (10) est agencé au moins partiellement à l'intérieur d'une couche isolante commune (14, 21).

9. Moteur à combustion interne (13) selon la revendication 7 ou 8, **caractérisé en ce que** le moteur (13) est doté d'une source de chaleur externe (19) pour réchauffer le gaz d'échappement dans le conduit basse-pression (12, 12').
